# EUROPEAN PATENT SPECIFICATION

(11) **EP 3 451 189 B1**
(45) Date of publication and mention of the grant of the patent: **02.12.2020**
(21) Application number: 17188604.7
(22) Date of filing: 30.08.2017
(51) Int. Cl.: G06F 16/9032, G06F 9/48, G10L 15/22

(54) **A SYSTEM AND METHOD FOR USER QUERY RECOGNITION**
SYSTEM UND VERFAHREN ZUR BENUTZERANFRAGEERKENNUNG
SYSTÈME ET PROCÉDÉ DE RECONNAISSANCE DE REQUÊTES D'UTILISATEURS

(43) Date of publication of application: 06.03.2019
(73) Proprietor: Deutsche Telekom AG, 53113 Bonn (DE)
(72) Inventor: Korff, Gerrit Matti, 13627 Berlin (DE); Jalali, Adrin, 10437 Berlin (DE); Bachmann, Florian, 60385 Frankfurt am Main (DE)
(74) Representative: Raible Deissler Lehmann Patentanwälte PartG mbB

(56) References cited:
- US-A1- 2004 193 420
- US-A1- 2014 195 243
- US-A1- 2016 155 442
- US-A1- 2016 188 565
- US-B1- 7 036 128

## Description

### TECHNICAL FIELD

In general, the present disclosure relates broadly to the field of dialog systems. More specifically, the present disclosure relates to a query recognition system and method for automatically recognizing a linguistic user query.

### BACKGROUND

Dialog systems are widely used in the information technology industry, e.g. applications like personal assistants or smarthome devices. Generally, a dialog system refers to a computer-based agent having a human-centric interface for accessing, processing, managing, and delivering information. Dialog systems are also known as chat information systems, spoken dialog systems, conversational agents, chatter robots, chatterbots, chatbots, chat agents, digital personal assistants, automated online assistants, and so forth.

Conventionally, a dialog system interacts with its users in natural language to simulate an intelligent conversation and provides personalized assistance to the users. For example, a user may generate requests to the dialog system in the form of conversational questions, such as "How is the weather in Darmstadt?" and receive corresponding answers from the dialog system in the form of audio and/or displayable messages. The users may also provide voice commands to the dialog system requesting the performance of certain functions including, for example, making phone calls, starting music, acquiring data, requesting notifications or reminders, and so forth. These and other functionalities make dialog systems very popular as they are of great help.

Although dialog systems are a popular tool in day-to-day errands, there are still a number of user requests that conventional dialog systems cannot correctly process. Namely, conventional dialog systems cannot accurately process user requests that are not generally understandable out of speech or environmental context. For instance, a first user request "What is the weather like in Bonn?" is generally understandable, and traditional dialog systems are typically able to process such a request and provide a corresponding response. However, if the user makes the second user request "What about Berlin?" right after receiving the response to the first user request, the second user request will not be correctly processed by conventional dialog systems as long as each user request is processed independently.

In another example, when a dialog system is used for controlling multiple applications, some user commands may not be understandable by the dialog system. For instance, the verbal user command "Next" may mean different actions in different applications. In one application, it can mean "playing the next song", while in another application it may mean "switching to another TV channel", and so forth. Therefore, it can be inconvenient or annoying to users when conventional dialog systems either do not process or inaccurately process at least some of user requests.

General concepts have been developed to realize a context engine in the state-of-the-art dialog systems (e.g., see US 2016/0259775 A1), which can process user requests by using speech and environmental contexts. The speech contexts are based on a sequence of prior user requests or dialog system answers and the environmental contexts are based on geographical locations, weather conditions, user actions, user motions, user directions and so forth.

US 2016/188565 A1 discloses methods and systems for discriminating ambiguous expressions, such as natural language expressions in the form of a spoken or textual language input, to enhance user experience, wherein a dynamic system including a speech recognition component, a language understanding component, a dialog component and a backend engine is disclosed.

US 2016/0155442 A1 discloses a device and method for receiving user input including tasks to be performed and for controlling which action provider out of a plurality of registered action providers performs the tasks, wherein an utterance can comprise one or more tasks and tasks can be recognized by the voice recognition technology.

However, the state-of-the-art dialog systems still have a major problem: As command recognition is a multi-class classification problem in machine learning, the command recognition suffers in terms of performance once the number of commands (i.e. classes) is too high. This results in a limited number of the supported commands per application in the state-of-the-art dialog systems. Besides, adding a new command will conflict with other commands as all the commands are included altogether in one dialog system.

In light of the above, there is a need for an improved system as well as a corresponding method for automatically recognizing a linguistic user query, enabling recognition of a user query out of context and improving the overall recognition accuracy.

### SUMMARY

It is an object of the disclosure to provide an improved system and method for automatically recognizing a linguistic user query, enabling recognition of a user query out of context and improving the overall recognition accuracy.

The foregoing and other objects are achieved by the subject matter of the independent claims. Further implementation forms are apparent from the dependent claims, the description and the figures.

Generally, the present disclosure relates to a dialog system and a corresponding method for accurately processing user requests that may not be understandable out of speech and/or environmental context. More specifically, embodiments of the present disclosure can identify contexts related to particular user requests and process the user requests based on the identified contexts. Contexts may refer to speech contexts, which are based on a sequence of prior user requests or dialog system answers. Contexts may also refer to environmental contexts, which are based on geographical locations, weather conditions, user actions, and so forth.

According to the embodiments of the present disclosure, the dialogue system comprises a dispatcher and a group of natural language processing entities. The dispatcher can send user requests to the group of natural language processing entities and evaluate their responses according to a set of context rules. Each natural language processing entity is associated with a specific domain or a specific computer service, such as music player, smarthome, telephony, etc. and can process user requests to infer intent (e.g. "play music") and context (e.g. "The Rolling Stones") related to the specific computer service.

In contrast to conventional approaches, the embodiments of the disclosure allow taking into account user requests on multiple levels: firstly, the user request is taken into account on the basis of the entity or intent. It is achieved through the differentiation of active and inactive natural language processing entities and by prioritizing entity responses from recently activated entities. Secondly, the user request is taken into account on the basis of the context, which is achieved with the fill policy, allowing natural language processing entities to fill in or predict missing context. The details of the dialogue system will be presented in the following.

According to a first aspect the disclosure relates to a query recognition system for automatically recognizing a current linguistic user query, the current linguistic user query being represented by digital values. The query recognition system comprises: a group of natural language processing entities for associating computer readable commands with linguistic user queries, the computer readable commands relating to specific computer services which are different for each language processing entity; and a dispatcher being configured to select a natural language processing entity which most recently output a computer readable command from the group of natural language entities, and to pass on the current linguistic user query to the selected natural language processing entity; wherein the selected natural language processing entity is configured to determine whether a computer readable command is associated with the current linguistic user query, and to output a computer readable command if the computer readable command is associated with the current linguistic user query.

Thus, a query recognition improved system is provided, enabling recognition of a user query out of context and improving the overall recognition accuracy.

the selected natural language processing entity is configured to output a fail message if the selected natural language processing entity failed to associate a computer readable command with the current linguistic user query; the dispatcher is configured, in response to the fail message, to select a second natural language processing entity which second most recently output a computer readable command from the group of natural language entities, and to pass on the current linguistic user query to the selected second natural language processing entity; and the selected second natural language processing entity is configured to determine whether a computer readable command is associated with the current linguistic user query, and to output a computer readable command if the computer readable command is associated with the current linguistic user query.

Thus, a second natural language processing entity is selected, enabling further recognition of a user query out of context and improving the overall recognition accuracy.

the selected natural language processing entity is configured to select a second natural language processing entity which second most recently output a computer readable command from the group of natural language entities, and to pass on the current linguistic user query to the selected second natural language processing entity; and the selected second natural language processing entity is configured to determine whether a computer readable command is associated with the current linguistic user query, and to output a computer readable command if the computer readable command is associated with the current linguistic user query.

Thus, a second natural language processing entity is selected, enabling further recognition of a user query out of context and improving the overall recognition accuracy.

the selected second natural language processing entity is configured to output a fail message if the selected second natural language processing entity failed to associate a computer readable command with the current linguistic user query.

the dispatcher is configured to include a further natural language processing entity into the a group of natural language processing entities and to activate a further natural language processing entity if each natural language processing entity in the group of natural language processing entities failed to associate a computer readable command with the current linguistic user query, the further natural language processing entity being associated with computer readable commands which are assigned to another specific service.

Thus, a further natural language processing entity can be activated, enabling further recognition of a user query out of context.

the dispatcher is configured to pass on the current linguistic user query to the further natural language processing entity; and wherein the further natural language processing entity is configured to determine whether a computer readable command is associated with the current linguistic user

query, and to output a computer readable command if the computer readable command is associated with the current linguistic user query.

In a further possible implementation form of the first aspect, the dispatcher comprises a dispatcher natural language processing entity, and wherein the dispatcher is configured to pass on the current linguistic user query to the dispatcher natural language processing entity; and wherein the dispatcher natural language processing entity is configured to determine whether a computer readable command is associated with the current linguistic user query, and to output a computer readable command if the computer readable command is associated with the current linguistic user query.

Thus, a dispatcher natural language processing entity is provided, enabling further recognition of a user query out of context.

the dispatcher natural language processing entity is configured to include a further natural language processing entity into the a group of natural language processing entities and to activate a further natural language processing entity if each natural language processing entity in the group of natural language processing entities failed to associate a computer readable command is associated with the current linguistic user query, the further natural language processing entity being associated with computer readable commands which are assigned to another specific service.

Thus, a further natural language processing entity can be activated, enabling further recognition of a user query out of context.

In a further possible implementation form of the first aspect, each natural language processing entity comprises a database being configured to store the computer readable commands relating to a specific computer service, and wherein the selected natural language processing entity is configured to determine whether a computer readable command stored in the database of the selected natural language processing entity is associated with the current linguistic user query, to retrieve the computer readable command from the database if the computer readable command is associated with the current linguistic user query.

Thus, a database for storing the computer readable commands relating to a specific computer service is provided, allowing recognition of a user query and improving the overall recognition accuracy.

In a further possible implementation form of the first aspect, the current linguistic user query comprises a current query parameter, and wherein the computer readable command refers or accounts to the current query parameter.

In a further possible implementation form of the first aspect, the current linguistic user query comprises a current query parameter, wherein the selected natural language processing entity is configured to extract the current query parameter from the current linguistic user query, and to determine whether a previously received linguistic user query contained a previous query parameter of the same parameter type as the current query parameter in order to associate a computer readable command with the current linguistic user query.

In a further possible implementation form of the first aspect, if the previously received linguistic user query contained a previous query parameter of the same parameter type as the current query parameter, the selected natural language processing entity is configured to modify a previously output computer command upon exchanging the previous query parameter by the current query parameter.

Thus, a user query can be recognized in an efficient manner and a corresponding computer readable command can be output efficiently and accurately.

In a further possible implementation form of the first aspect, the parameter type is intent type or context type, the intent type indicating an intent of a linguistic user query, in particular a specific action, the context type indicating a media type or a resource.

In a further possible implementation form of the first aspect, the current query parameter is an intent parameter indicating an intent of the current linguistic query or a context parameter indicating a context of the linguistic query.

In a further possible implementation form of the first aspect, a specific computer service is one of the following services: information service, for instance event information service or weather information service or location information service or a content selection service or shopping information service or joke information service or world knowledge service or train information service, or a device control service, for instance audio player control service or TV control service or timer control service or reminder control service.

In a further possible implementation form of the first aspect, the dispatcher is configured to remove a natural language processing entity from the group of natural language processing entities or deactivate a natural language processing entity if the natural language processing entity has not output a computer readable command after a predetermined number of linguistic user queries or for a predetermined period of time, for instance for 1 second, 2 seconds or 30 seconds.

Thus, an inactive natural language processing entity can be deactivated in the query recognition system, allowing saving the computation resources and improving the performance of the query recognition system.

In a further possible implementation form of the first aspect, the dispatcher is configured to communicate with the natural language processing entities using dedicated interfaces, in particular APIs, or via a communication network, in particular using the IP protocol.

In a further possible implementation form of the first aspect, the query recognition system comprises a processor, which is configured to implement the dispatcher.

Thus, an improved query recognition method is provided, enabling recognition of a user query out of context and improving the overall recognition accuracy.

The disclosure can be implemented in hardware and/or software.

### BRIEF DESCRIPTION OF THE DRAWINGS

Further embodiments of the disclosure will be described with respect to the following figures, wherein:
Figure 1 shows a schematic diagram of a query recognition system according to an embodiment;
Figure 2 shows a schematic diagram of a natural language processing entity according to an embodiment;
Figure 3 shows a schematic diagram of a query recognition system according to an embodiment;
Figure 4 shows a schematic diagram illustrating an exemplary procedure of user query recognition according to an embodiment; and
Figure 5 shows a schematic diagram illustrating a query recognition method according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present disclosure may be placed. It will be appreciated that other aspects may be utilized and structural or logical changes may be made without departing from the scope of the present disclosure. The following detailed description, therefore, is not to be taken in a limiting sense, as the scope of the present disclosure is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present disclosure covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

As will be described in more detail in the following, embodiments of the present disclosure relate to a dialog system 100 in the form of a query recognition system 100 and relevant interfaces, wherein the query recognition system 100 comprises a dispatcher 101 and a group of natural language processing entities 131a-c and wherein the relevant interfaces comprise a dialog system interface 301 at the user side and dedicated interfaces between the dispatcher 101 and the group of natural language processing entities 131a-c.

The query recognition system 100 can maintain a plurality of dialog system rules stipulating instructions on how the query recognition system shall respond to a particular user request received from the dialog system interface. In an implementation, the dialog system rules can comprise intents for describing dialog steps and extraction of information during execution of the dialog steps. The dialog system rules can be implemented by using machine learning classifiers, rule engines, heuristics algorithms, and so forth.

The query recognition system 100 can also maintain a context database for speech and environment contexts. Speech context can comprise one or more context expressions associated with at least one dialog system rule. For example, some context expressions may relate to terms, keywords, phrases and/or questions virtually linked with a certain "element" (i.e., a dialog system element which will be explained further below). Environmental context can be defined by the device of the user, user profile, geographical location, environmental conditions, and so forth. The environmental context can be either an attribute of the user session with the query recognition system or passed by a host system to the query recognition system 100.

According to an embodiment, the query recognition system 100 can receive user requests acquired by the dialog system Interface 301. The audio user requests can be preprocessed to a text-based user input. Then, the query recognition system 100 can process the user request by applying one of the dialog system rules or a statistics-based dialog system responding scheme. If the query recognition system 100 determines that the user request cannot be understood out of context, the query recognition system 100 can identify a context stored in the context database that relates to at least a portion of the user request.

Furthermore, the query recognition system 100 can select, from the plurality of dialog rules or responding schemes, a particular dialog system rule or responding scheme which is associated with the identified context, and can generate a response to the user request by applying the selected dialog system rule or responding scheme to at least a part of the user request. The query recognition system 100 can thus transfer the response to the user or cause the dialog system interface 301 to present the response to the user.

The term "context", according to embodiments of the disclosure, refers to conversational context and/or environmental context. The conversational context relates to a dialog between the user and the dialog system 100. The environmental context relates to one or more of the following: applications currently running at a client side, and current physical conditions associated with the user (such as geographical location, weather, time, etc.), information stored in the user profile, and the like. In an embodiment, a custom query recognition system 100 including specific dialog system rules and a statistics-based dialog system responding scheme can be created by an application developer, and associated with a custom context database.

Further implementation forms of the dispatcher 101 as well as the natural language processing entity 131a-c according to the disclosure will be described in more details further below.

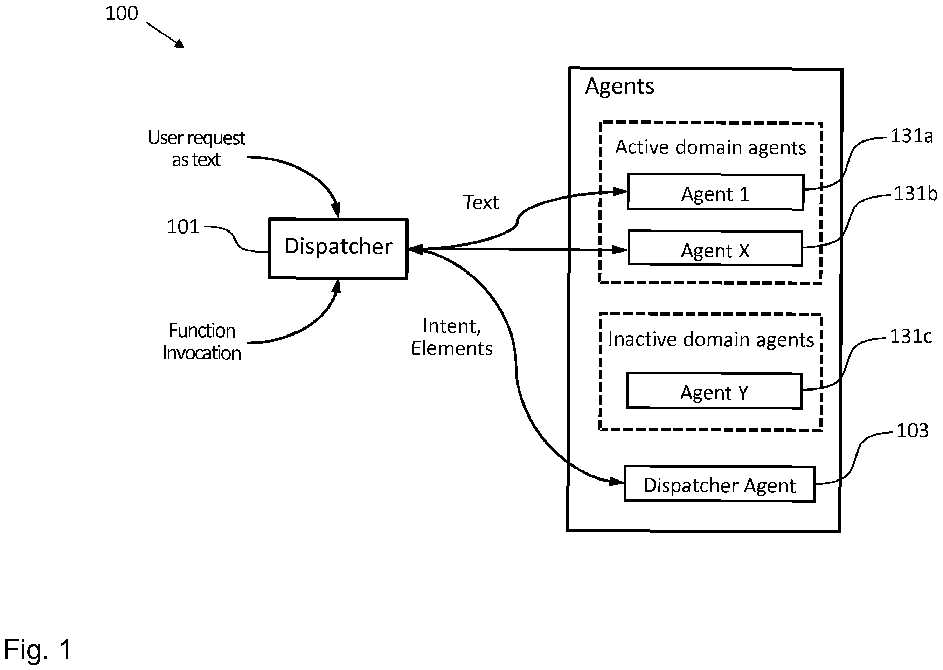

Figure 1 shows a schematic diagram illustrating a query recognition system 100 for automatically recognizing a current linguistic user query according to an embodiment, wherein the current linguistic user query can be represented by digital values. As can be taken from figure 1, the query recognition system 100 comprises a group of natural language processing entities 131a-c for associating computer readable commands with linguistic user queries, wherein the computer readable commands relate to specific computer services which are different for each language processing entity 131a-c.

In an exemplary embodiment, the specific computer services can be one of the following services: information service, such as event information service, weather information service, location information service, a content selection service, shopping information service, joke information service, world knowledge service and train information service, or a device control service, such as audio player control service, TV control service, timer control service, and reminder control service.

In an exemplary embodiment, the current linguistic user query comprises a current query parameter, wherein the current query parameter is an intent parameter indicating an intent of the current linguistic query or a context parameter indicating a context of the linguistic query, and the computer readable command refers or accounts to the current query parameter. These parameters, which can be used by the group of natural language processing entities 131a-c, will be described in more detail below.

The query recognition system 100 further comprises a dispatcher 101, wherein according to an embodiment the dispatcher 101 receives a linguistic user query (also referred to as "user request" hereafter) and sequentially forwards it to the currently active natural language processing entities 131a-c, which are ordered according to their time of activation. Firstly, a user request can be sent to the most recently activated natural language processing entity 131a. If this selected natural language processing entity 131a responds with the "None" intent, the user request is then forwarded to the next natural language processing entity 131b.

More specifically, the dispatcher 101 is configured to select a natural language processing entity 131a which most recently output a computer readable command from the group of natural language entities 131a-c, and to pass on the current linguistic user query to the selected natural language processing entity 131a.

The selected natural language processing entity 131a is configured to determine whether a computer readable command is associated with the current linguistic user query, and to output a computer readable command if the computer readable command is associated with the current linguistic user query.

In an embodiment, the selected natural language processing entity 131a is configured to extract the current query parameter from the current linguistic user query, and to determine whether a previously received linguistic user query contained a previous query parameter of the same parameter type as the current query parameter in order to associate a computer readable command with the current linguistic user query. The parameter type can be intent type or context type: the intent type indicates an intent of a linguistic user query, in particular a specific action; the context type indicates a media type or a resource. Besides, parameters can be inferred or predicted using machine learning on the previous query parameters.

If the previously received linguistic user query contained a previous query parameter of the same parameter type as the current query parameter, the selected natural language processing entity 131a is configured to modify a previously output computer command upon exchanging the previous query parameter by the current query parameter.

Furthermore, the selected natural language processing entity 131a is configured to output a fail message if the selected natural language processing entity 131a failed to associate a computer readable command with the current linguistic user query.

In response to the fail message, the dispatcher 101 is configured to select a second natural language processing entity 131b which second most recently output a computer readable command from the group of natural language entities 131a-c, and to pass on the current linguistic user query to the selected second natural language processing entity 131b.

In an embodiment, the selected natural language processing entity 131a can also be configured to select a second natural language processing entity 131b which second most recently output a computer readable command from the group of natural language entities 131a-c, and to pass on the current linguistic user query to the selected second natural language processing entity 131b.

The selected second natural language processing entity 131b is configured to determine whether a computer readable command is associated with the current linguistic user query, and to output a computer readable command if the computer readable command is associated with the current linguistic user query.

Furthermore, the selected second natural language processing entity 131b is configured to output a fail message if the selected second natural language processing entity 131b failed to associate a computer readable command with the current linguistic user query.

In some cases, if all active natural language processing entities 131a-c respond with a "None" intent, then the user request can be sent to a special dispatcher natural language processing entity 103 according to embodiments of the disclosure.

The dispatcher natural language processing entity 103 is responsible for activation of all other processing entities 131a-c. The action intents from all other natural language processing entities 131a-c, which are listed as entry points, can be combined into a single intent for activation of the natural language processing entities 131a-c. Hence, a single activation intent for each natural language processing entity 131a-c can be provided. When the dispatcher natural language processing entity 103 responds with an activation intent, the corresponding natural language processing entity 131a-c is activated by the dispatcher 101.

More specifically, the dispatcher 101 can comprise a dispatcher natural language processing entity 103 and can be configured to pass on the current linguistic user query to the dispatcher natural language processing entity 103, wherein the dispatcher natural language processing entity 103 is configured to determine whether a computer readable command is associated with the current linguistic user query, and to output a computer readable command if the computer readable command is associated with the current linguistic user query.

the dispatcher 101 or the dispatcher natural language processing entity 103 is configured to include a further natural language processing entity 131c into the group of natural language processing entities 131a-c and to activate a further natural language processing entity 131c if each natural language processing entity 131a-b in the group of natural language processing entities 131a-c failed to associate a computer readable command with the current linguistic user query, wherein the further natural language processing entity 131c is associated with computer readable commands which are assigned to another specific service.

After the activation and inclusion, the dispatcher 101 is configured to pass on the current linguistic user query to the further natural language processing entity 131c. The further natural language processing entity 131c is configured to determine whether a computer readable command is associated with the current linguistic user query, and to output a computer readable command if the computer readable command is associated with the current linguistic user query.

Finally, the dispatcher 101 is configured to remove a natural language processing entity 131a-c from the group of natural language processing entities 131a-c if the natural language processing entity 131a-c has not output a computer readable command after a predetermined number of linguistic user queries or for a predetermined period of time, for instance for 1 second, 2 seconds or 30 seconds.

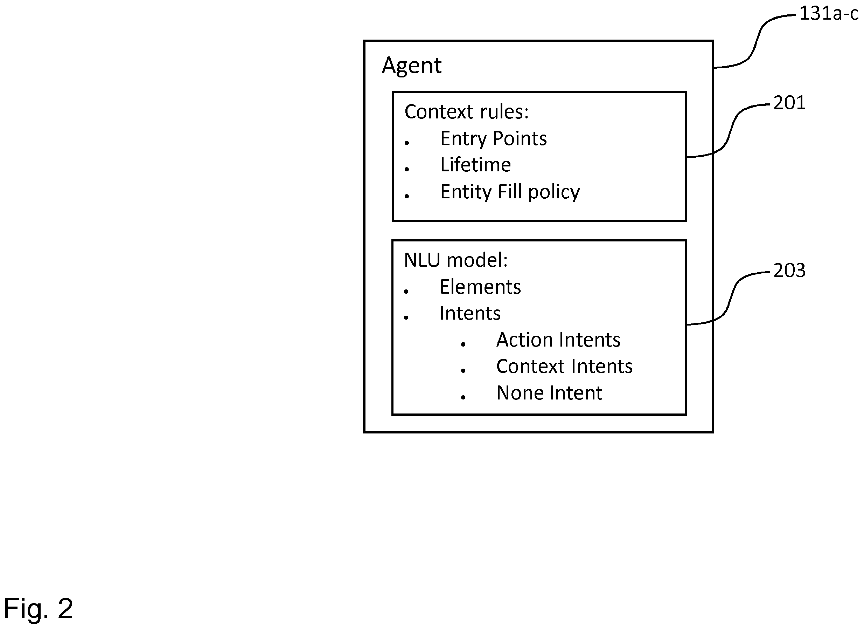

Figure 2 shows a schematic diagram of a natural language processing entity 131a-c according to an embodiment, wherein the natural language processing entity 131a-c (also referred to as "agent" hereafter) can comprise a set of rules 201 that determine its context behavior and a natural language understanding (NLU) model 203. The NLU model 203 infers "intent" and "element" from a linguistic user query or user request sent to the natural language processing entity 131a-c (or the agent), that is, the intended action and its parameters are resolved.

In an embodiment, each natural language processing entity 131a-c can comprise a database which is configured to store the computer readable commands relating to a specific computer service. After being selected by the dispatcher 101, a selected natural language processing entity 131a-c is configured to determine whether a computer readable command stored in the database of the selected natural language processing entity 131a-c is associated with the current linguistic user query, to retrieve the computer readable command from the database if the computer readable command is associated with the current linguistic user query.

According to an embodiment, there are three types of intents: "action" intents, "context" intents and the "none" intent. As the name implies, action intents can cause the performance of an action, e.g. the request: "How is the weather in Darmstadt" triggers a function to check the weather forecast for Darmstadt. The context intents can be associated with an action intent (e.g. for a "check weather" action intent there is a "check weather" context intent). The function of both intent types is identical, and thus they lead to a performance of a function. However, both recognize different linguistic user query, e.g. "How is the weather in Darmstadt" is recognized by the action intent and "How about Bonn" by the associated context intent. Finally, the None intent signals that the NLU model 203 cannot infer any other intent.

According to another embodiment, the context rules 201 can comprise three concepts: "Entry Points", "Lifetime" and "Element Fill Policy". Some or all Action intents in the NLU model can be defined as "Entry Points". These action intents will lead to an activation of the agent 131a-c by the dispatcher 101. The "Lifetime" determines how long an agent 131a-c remains active after its activation. This can be a number of user request, a timeframe or a combination thereof. The "Element Fill Policy" is used if context elements are missing in a user request but are necessary to perform the intended action. In this case, an agent 131a-c can infer the missing element through the Element Fill Policy, which ranges from default values defined by the user to predictions based on previous user requests.

The temporal perspective of the described setup can be separated into 2 distinct points: Firstly, in a short-term/immediate manner, based on information available from the immediate conversation, which can be realized through the agents 131a-c and context intents; secondly, in a long-term manner, based on information which is not necessarily related to the current conversation, which can be realized through the Fill Policy, especially when machine learning is utilized to learn a user behavior from previous conversations.

The chronology of agent activation is a crucial component according to embodiments of the disclosure. In an embodiment, the dispatcher 101 can send user requests or linguistic user queries to one active agent, i.e. natural language processing entity 131a-c after another, always waiting for response of the agents 131a-c. In a dialog system 100 with a large number of agents 131a-c, the response of the dialogue system 100 to the user may be delayed, making it inconvenient to use. An approach to this problem could be sending the user request to all active agents 131a-c simultaneously and then processing the responses. To still account for the chronology of activation, responses from recently activated agents 131a-c can be prioritized. However, this approach may require large network resources as a huge number of request can possibly be sent all the time.

An enhancement of the current implementation is to use a finer definition for the element context. Instead of using an agent-wide description of the Entity Fill Policy, intent and element can be specifically defined. Hence, depending on the intent, the same element can have a different Entity Fill Policy. Similarly, instead of using an agent-wide definition of Lifetime, it can be defined per Entry Point. Hence, depending on the action intent leading to an activation of the agent 131a-c, the Lifetime can be different.

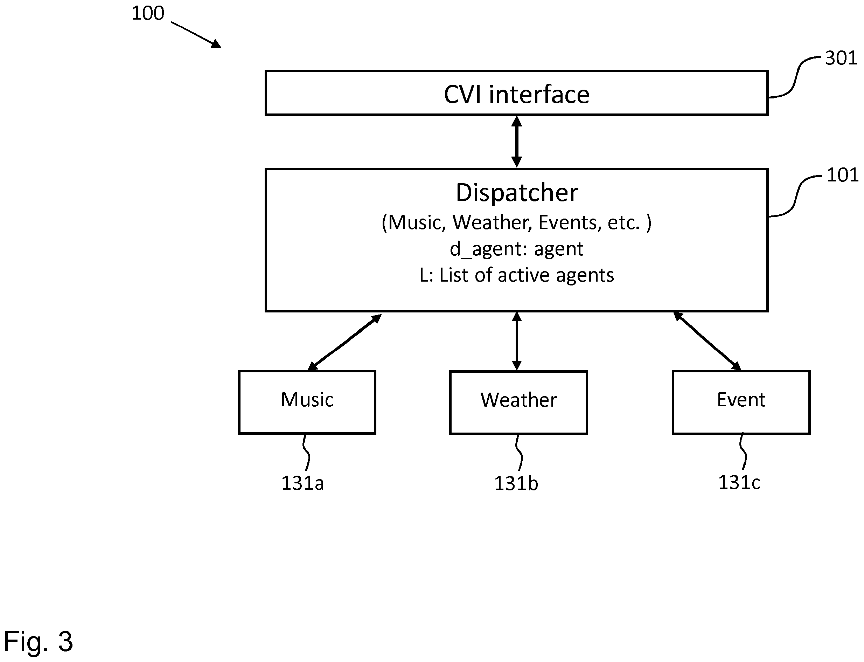

Figure 3 shows a schematic diagram illustrating a dialog system 100 in the form of a query recognition system 100 and relevant interfaces according to an embodiment, wherein the query recognition system 100 comprises a dispatcher 101 and a group of natural language processing entities 131a-c (also referred to as "agent" hereafter) and wherein the relevant interfaces comprise a dialog system interface 301 between a user and the dispatcher 101 and dedicated interfaces (not shown in figure 3) between the dispatcher 101 and the group of natural language processing entities 131a-c.

In an exemplary embodiment, the query recognition system 100 can comprise a processor configured to implement the dispatcher 101, and the dispatcher 101 can communicate with the group of natural language processing entities 131a-c using dedicated interfaces, in particular APIs, or via a communication network, in particular using the IP protocol.

As can be seen in figure 3, the group of natural language processing entities 131a-c (i.e. agents) comprise a music agent 131a, a weather agent 131b, and an event agent 131c. Each agent 131a-c comprises intents, elements, and/or utterances of its own. As aforementioned, the intents can cause an action such as "fetch_weather()" or can indicate no inent found such as "None" in an embodiment. The utterances represent the linguistic user queries, such as "How is the weather in Berlin?", which can be processed by the agent or the natural language processing entity 131a-c . The elements relate to terms, keywords, phrases and/or questions, such as "Berlin" in the above linguistic user query.

In an embodiment, the music agent 131a can comprise the following intents, elements and utterances:
- None
- command(concept_player_command)
   - Utterances:
      - Play next track
      - Play previous track
      - Repeat Track
- play_music(concept_music_artist, concept_music_genre)
   - Utterances:
      - Play music by Coldplay
      - Play music by Regina Spektor
      - and now Coldplay
      - and now Regina Spektor
- stop_music()
   - Utterances:
      - Stop music
      - Cancel music

In an embodiment, the weather agent 131b can comprise the following intents, elements and utterances:
- None
- fetch_weather(concept_date, concept_city)
   - Utterances:
      - How is the Weather in Berlin
      - How is the Weather in Bonn
      - Does it rain in Darmstadt
      - How it the weather tomorrow in Bonn
- fetch_weather_with_context(concept_date, concept_city)
   - Utterances:
      - and in Berlin
      - and Darmstadt?
      - tomorrow in Cologne?

In an embodiment, the event agent 131c can comprise the following intents, elements and utterances:
- None
- event_search(concept_date, concept_event, concept_city)
   - Utterances:
      - Which events are in Bonn
      - Is an event in Darmstadt
      - Is soccer on saturday
      - Does Coldplay Play in Berlin tomorrow
- event_search_with_context(concept_date, concept_event, concept_city)
   - Utterances:
      - and in Bonn
      - and Darmstadt
      - tomorrow in Cologne?
      - Is there tomorrow soccer
      - does coldplay play there

Furthermore, the dispatcher 101 can have one intent for each agent 131a-c as follows according to an embodiment:
- None
- activate_agent(concept_agent_name)
- event_search()
   - Utterances (same is in event agent - in best case synced by an API):
      - Which events are in Bonn
      - Is an event in Darmstadt
      - Is soccer on saturday
      - Does Coldplay Play in Berlin tomorrow
- fetch_weather()
   - Utterances (same is in weather agent - in best case synced by an API):
      - How is the Weather in Berlin
      - How is the Weather in Bonn
      - Does it rain in Darmstadt
      - How it the weather tomorrow in Bonn
- play_music()
   - Utteranes (same is in music agent - in best case synced by an API)
      - Play music by Coldplay
      - Play music by Regina Spektor
      - and now Coldplay
      - and now Regina Spektor
      - Stop music
      - Cancel music
      - Play next track
      - Play previous track
      - Repeat Track

It is worth noting that the dispatcher 101 has the same utterances (everything, except the context) for the intent "fetch_weather" as the weather agent 131b, wherein these utterances comprise: "How is the Weather in Berlin", "How is the Weather in Bonn", "Does it rain in Darmstadt", and "How it the weather tomorrow in Bonn" according to the embodiment. Such architecture allows using more split-ups of the intents into different agents 131a-c, i.e., different services.

Therefore, each agent, i.e. each natural language processing entity 131a-c can define its own entry points. These entry points are intents that trigger the activation of the agent 131a-c. For example, for an agent 131a such as a music player, the intent "play some Regina Spektor" can activate the agent 131a while the intent "play next track" may not succeed. The intent "Play next track" can only be understood if the music agent 131a is already active and running.

To recognize the intents which are not understood by agents 131a-c, the dispatcher 101 can comprise a dispatcher natural language processing entity 103 according to an embodiment, which is trained on all the entry points of the agents 131a-c, and knows some extra intents to handle cases such as "Activate music player" or "I want to talk to my music player", in which "music player" in this case is a synonym for the music-player agent 131a. The intent can be, for instance, named as "ACTIVATE_AGENT YYY", wherein YYY is the name of the agent 131a-c.

Furthermore, according to an embodiment each agent 131a-c can also provide two special variables: "KEEP_ALIVE" and "LIFE_TIME", which control the stay of the agent 131a-c in the local list of the dispatcher 101 for active agents 131a-c. Another special intent is "None" which means that the agent 131a-c was not able to recognize the utterance (i.e. the user query).

As intent recognition is a multi-class classification problem in machine learning, the intent recognition suffers in terms of performance once the number of intents (hence classes) are too many. This results in a limited number of the supported intents per agent 131a-c in the state-of-the-art dialog systems.

Compared to the state-of-the-art dialog systems, the embodiments of the disclosure employ a dispatcher 101, which is trained on the entry points of the intents and not the rest of them, and a group of natural language processing entities or agents 131a-c embedded inside each domain service, and each of the agents 131a-c is trained for only the relevant intents. This indicates that the limitation related to the maximal number of intents can be overcome according to the embodiments of the present disclosure.

Moreover, the embodiments of the present disclosure also provide the following advantage: adding a new intent will not conflict with other intents, which would be the problem for the state-of-the-art dialog systems as all the intents are included altogether in one dialog system.

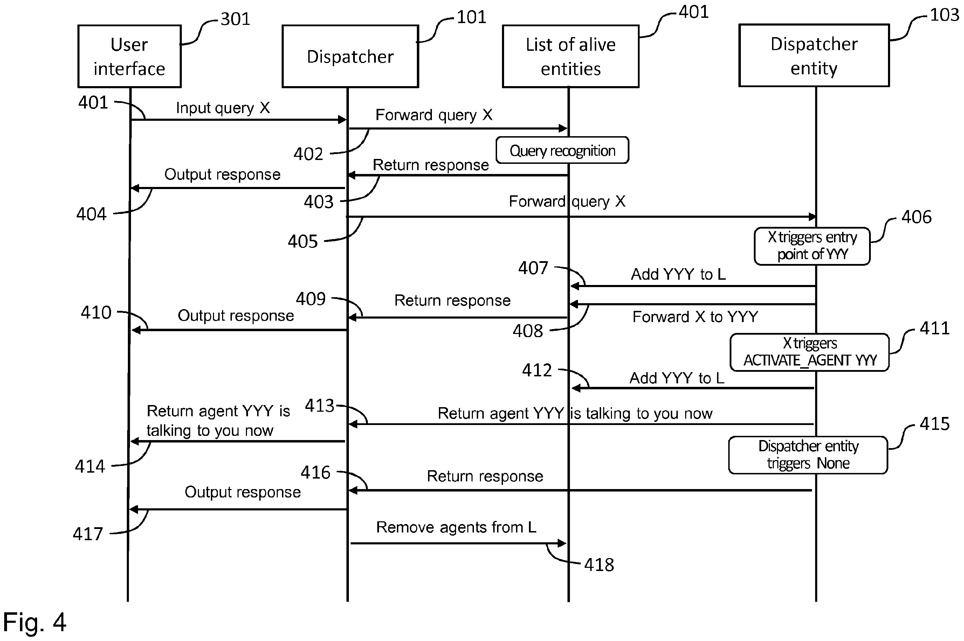

Figure 4 shows a schematic diagram illustrating an exemplary procedure of user query recognition as implemented in embodiments of the disclosure, wherein a user query X (also referred to as "utterance") is received by the dispatcher 101 via the dialog system interface 301 at the user side and the dispatcher 101 can sequentially forward it to a local list L 451 of the currently active natural language processing entities 131a-c or the dispatcher natural language processing entity 103. The procedure shown in figure 4 comprises the following steps:
The user query X is input via the dialog system interface 301 from a user and received by the dispatcher 101 (step 401).
The dispatcher 101 passes on the utterance, i.e. user query X, to members of the local list L 451 and finds the first natural language processing entity or agent 131a-c understanding the utterance, i.e. returning an intent other than "None" (step 402).
If such an agent exists in the local list L 451, a response message from that agent is returned (step 403) to the dispatcher 101 and output to the user (step 404).
Otherwise, the dispatcher 101 passes on the utterance X to the dispatcher natural language processing entity 103 (step 405).
The dispatcher natural language processing entity 103 checks whether the utterance X triggers any entry point of an agent YYY (step 406).
If yes, the dispatcher natural language processing entity 103 adds the agent YYY to the local list L 451 (step 407) and forwards the utterance X to the agent YYY (step 408).
A response message from the agent YYY is returned (step 409) to the dispatcher 101 and output to the user (step 410).
If no, the dispatcher natural language processing entity 103 checks whether the utterance X triggers ACTIVATE_AGENT YYY (step 411).
If yes, the dispatcher natural language processing entity 103 adds YYY to the local list L 451 (step 412) and returns "skill YYY is talking to you now" (step 413).
The dispatcher (101) returns "skill YYY is talking to you now" to the user via the interface 301 (step 414).
If no, the dispatcher natural language processing entity 103 triggers "None" (step 415) and returns the response (step 416) and the dispatcher 101 outputs it to the user (step 417).
The dispatcher 101 removes all the agents from the local list L 451 that do not have KEEP_ALIVE as true and have been inactive for at least LIFE_TIME (step 418).

According to an embodiment, a natural language processing entity or an agent 131a-c, which is skilled to handle limited and specific situations, can comprise the following features: a feature of "intent and element recognition", wherein the agent 131a-c has an element recognition engine embedded inside which takes the utterance and returns the inferred intent and elements; a feature of "entry points", wherein an agent 131a-c can define zero or one or more of its intents as entry points, which can be used by the dispatcher 101 to activate an agent 131a-c; a feature of "special variables", such as LIFE_TIME which can keep the agent 131a-c alive or kill the agent 131a-c according to certain rules or setups.

According to an embodiment, the natural language processing entity 131a-c or the agent can further comprise the following optional features: firstly, "mandatory fields and prompts for missing parameters", wherein a defined intent can include mandatory fields and wherein the agent 131a-c will return a prompt asking for that parameter, if the given utterance triggers such an intent but does not provide those required parameters.

Secondly, the natural language processing entity or the agent 131a-c can comprise a feature of "local context", wherein a context variable is a variable within a life time (with a number of minutes and a number of messages it lasts), created as a possible output of an intent, and can be required by intents. An intent requiring a context will not be triggered unless the required context variable is present.

Thirdly, the natural language processing entity or the agent 131a-c can comprise a feature of "actions and events". Each intent triggers an action. An event can be mapped to an action, in which case, the event (hence the action), can be triggered programmatically using an API. The action returns a response using values taken from the conversation, context, and a backend (see the feature "fulfillment" below).

Fourthly, the natural language processing entity or the agent 131a-c can comprise a feature of "fulfillment": an action can be attached to a webhook, from which it takes data to fulfill requirements of the response.

Finally, the natural language processing entity or the agent 131a-c can also comprise a feature of "Per-user entities" by having some elements or element values only for certain users and a feature of "Session" by allowing contexts to exist within a certain session only.

The implementation of the dispatcher 101 can provide a context in a sense that which agent 131a-c relevant at a given time is known, which is referred to as an "intent context". On the other hand, it is possible to have a context regarding elements, e.g. which city has been used most frequently? Which date/time was mentioned within the last 10 minutes, etc. In order to handle some common situations, after the intent is recognized, which elements required for that intent are checked and can be filled using different policies. It is up to the agent/skill designer to determine which of these options are valid for which element, and with which order.

According to an embodiment, the query recognition system 100 can comprise one of the following features related to the context regarding elements: firstly, "Current Context" includes current time, current location, current date, etc. Secondly, "Recent History" checks if the element has been present in the last N minutes and/or within the last M utterances, and if yes, sets the value according to the last one used. Thirdly, "Smart" uses some sort of statistical and/or machine learning model to return a value for the requested element for the specified agent and intent. For instance, if a user inputs the same city when asking for weather 90% of the time, it is safe to assume that city if a name of a place is missing from an utterance of asking weather. Fourthly, "Default Values" can be set by the user for some elements, e.g. hometown, home address, etc. Finally, "Prompts" can be set for a missing element by the agent 131a-c as a last resort, wherein the user will be prompted with a given question to fill in the missing entity.

According to an embodiment, an example of the agent configuration is described below, wherein the agent 131a-c comprises: name (such as music-player); life_time (such as default: -1, stop_command: 0); access_token (such as asfdwsajgcsaufdysajfdgwaiuefgg); server_url (such as nlu.server.localdomain); lang (such as de); entry_points (such as play_music).

Furthermore, the elements can comprise: music-artist (such as fill_policy: [smart, context, default], context_lifeetime: 5); music-genre (such as fill_policy: [smart, context, default, prompt], context_lifetime: 3); prompts (such as which genre? what kinda music?could you name a genre?). Also, the intents can comprise: play_music (such as required_entities: [music-artist, music-genre]).

As can be seen from the above configuration, this music-player agent 131a-c has life time set as -1 unless the stop music command (intent) is triggered. It also sets required elements for the play_music intent, as music-genre or music-artist. The agent 131a-c will only try to fill them if none of them is provided by the user. The configuration also sets a non-default value for the lifetime of the elements in the context, after which they are forgotten.

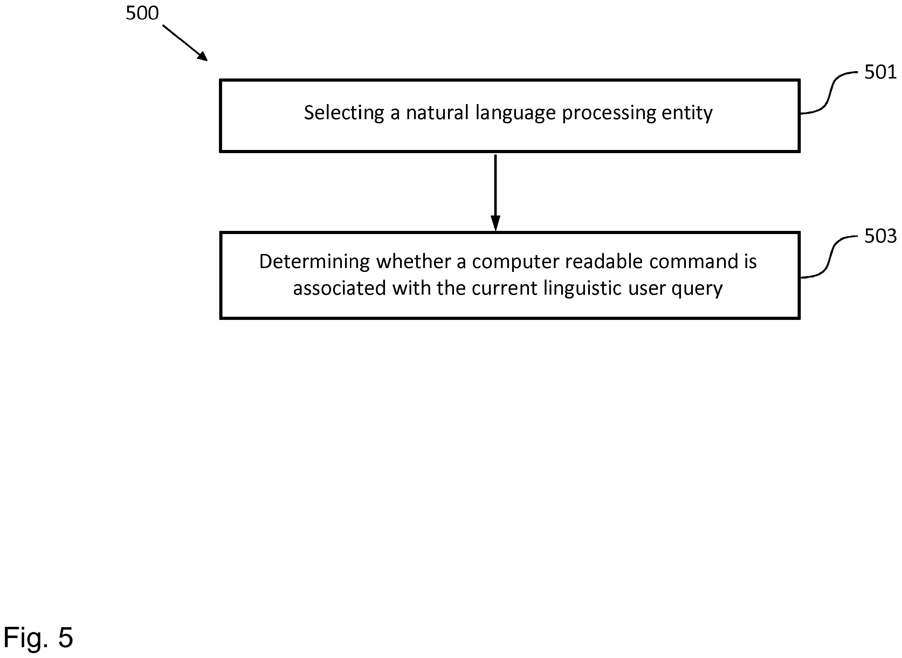

Figure 5 shows a flow diagram illustrating a corresponding query recognition method 500 for operating the query recognition system 100. The query recognition system 100 is configured to automatically recognize a current linguistic user query using a group of natural language processing entities 131a-c for associating computer readable commands with linguistic user queries, wherein the current linguistic user query can be represented by digital values and the computer readable commands relate to specific computer services which are different for each language processing entity 131a-c.

The method 500 comprises the steps of: selecting 501 a natural language processing entity which most recently output a computer readable command from the group of natural language entities, and to pass on the current linguistic user query to the selected natural language processing entity; and determining 503 whether a computer readable command is associated with the current linguistic user query, and to output a computer readable command if the computer readable command is associated with the current linguistic user query by the selected natural language processing entity.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the disclosure beyond those described herein. While the present disclosure has been described with reference to one or more particular embodiments, those skilled in the art recognize that many changes may be made thereto without departing from the scope of the present disclosure. It is therefore to be understood that within the scope of the appended claims and their equivalents, the disclosure may be practiced otherwise than as specifically described herein.

## Claims

1. Query recognition system (100) for automatically recognizing a current linguistic user query, the current linguistic user query being represented by digital values, the query recognition system (100) comprising:
a group of natural language processing entities (131a,b) for associating computer readable commands with linguistic user queries, the computer readable commands relating to specific computer services which are different for each language processing entity (131a,b); and
a dispatcher (101) being configured to select a natural language processing entity (131a) which most recently output a computer readable command from the group of natural language entities (131a,b), and to pass on the current linguistic user query to the selected natural language processing entity (131a); wherein
the selected natural language processing entity (131a) is configured to determine whether a computer readable command is associated with the current linguistic user query, and to output a computer readable command if the computer readable command is associated with the current linguistic user query,
wherein the selected natural language processing entity (131a) is configured to output a fail message if the selected natural language processing entity (131a) failed to associate a computer readable command with the current linguistic user query; and
wherein the dispatcher (101) or the selected natural language processing entity (131a) is configured, in response to the fail message, to select a second natural language processing entity (131b) which second most recently output a computer readable command from the group of natural language entities (131a,b) and to pass on the current linguistic user query to the selected second natural language processing entity (131b); and wherein
the selected second natural language processing entity (131b) is configured to determine whether a computer readable command is associated with the current linguistic user query, and to output a computer readable command if the computer readable command is associated with the current linguistic user query,
wherein the selected second natural language processing entity (131b) is configured to output a fail message if the selected second natural language processing entity (131b) failed to associate a computer readable command with the current linguistic user query,
wherein the dispatcher (101) is configured to activate a further natural language processing entity (131c) and to include the further natural language processing entity (131c) into the group of natural language processing entities (131a,b) if each natural language processing entity in the group of natural language processing entities (131a,b) failed to associate a computer readable command with the current linguistic user query, the further natural language processing entity (131c) being associated with computer readable commands which are assigned to another specific service, and to pass on the current linguistic user query to the further natural language processing entity (131c); and to remove a natural language processing entity (131a-c) from the group of natural language processing entities (131a-c) if the natural language processing entity (131a-c) has not output a computer readable command after a predetermined number of linguistic user queries or for a predetermined period of time, for instance for 1 second, 2 seconds or 30 seconds, wherein the further natural language processing entity (131c) is configured to determine whether a computer readable command is associated with the current linguistic user query, and to output a computer readable command if the computer readable command is associated with the current linguistic user query.

2. Query recognition system (100) according to claim 1, wherein each natural language processing entity (131a-c) comprises a database being configured to store the computer readable commands relating to a specific computer service, and wherein the selected natural language processing entity (131a) is configured to determine whether a computer readable command stored in the database of the selected natural language processing entity (131a) is associated with the current linguistic user query, and to retrieve the computer readable command from the database if the computer readable command is associated with the current linguistic user query.

3. Query recognition system (100) according to anyone of the preceding claims, wherein the current linguistic user query comprises a current query parameter, and wherein the computer readable command refers or accounts to the current query parameter.

4. Query recognition system (100) according to anyone of the preceding claims, wherein the current linguistic user query comprises a current query parameter, wherein the selected natural language processing entity (131a) is configured to extract the current query parameter from the current linguistic user query, and to determine whether a previously received linguistic user query contained a previous query parameter of the same parameter type as the current query parameter in order to associate a computer readable command with the current linguistic user query.

5. Query recognition system (100) according to claim 4, wherein, if the previously received linguistic user query contained a previous query parameter of the same parameter type as the current query parameter, the selected natural language processing entity (131a) is configured to modify a previously output computer command upon exchanging the previous query parameter by the current query parameter.

6. Query recognition system (100) according to claim 4 or 5, wherein the parameter type is intent type or context type, the intent type indicating an intent of a linguistic user query, in particular a specific action, the context type indicating a media type or a resource.

7. Query recognition system (100) according to anyone of the claims 3 to 6, wherein the current query parameter is an intent parameter indicating an intent of the current linguistic query or a context parameter indicating a context of the linguistic query.

8. Query recognition system (100) according to anyone of the preceding claims, wherein a specific computer service is one of the following services: information service, for instance event information service or weather information service or location information service or a content selection service or shopping information service or joke information service or world knowledge service or train information service, or a device control service, for instance audio player control service or TV control service or timer control service or reminder control service.

9. Query recognition system (100) according to anyone of the preceding claims, wherein the dispatcher (101) is configured to communicate with the natural language processing entities (131a-c) using dedicated interfaces, in particular APIs, or via a communication network, in particular using the IP protocol.

10. Query recognition system (100) according to anyone of the preceding claims, comprising a processor, the processor being configured to implement the dispatcher (101).

11. Query recognition method (500) for automatically recognizing a current linguistic user query, the current linguistic user query being represented by digital values using a group of natural language processing entities (131a,b) for associating computer readable commands with linguistic user queries, the computer readable commands relating to specific computer services which are different for each language processing entity, comprising:
selecting (501), by using a dispatcher (101), a natural language processing entity (131a) which most recently output a computer readable command from the group of natural language entities (131a,b), and to pass on the current linguistic user query to the selected natural language processing entity (131a); and
determining (503), by the selected natural language processing entity (131a), whether a computer readable command is associated with the current linguistic user query,
outputting, by the selected natural language processing entity (131a), a computer readable command if the computer readable command is associated with the current linguistic user query by the selected natural language processing entity (131a), and
outputting, by the selected natural language processing entity (131a), a fail message if the selected natural language processing entity (131a) failed to associate a computer readable command with the current linguistic user query; and
selecting, by the dispatcher or the selected natural language processing entity (131a), in response to the fail message, a second natural language processing entity which second most recently output a computer readable command from the group of natural language entities (131a,b), and passing on the current linguistic user query to the selected second natural language processing entity (131b), and
determining by the selected second natural language processing entity (131b), whether a computer readable command is associated with the current linguistic user query, outputting a computer readable command if the computer readable command is associated with the current linguistic user query, and outputting a fail message if the selected second natural language processing entity (131b) failed to associate a computer readable command with the current linguistic user query, and
activating and including, by the dispatcher (101), a further natural language processing entity (131c) into the group of natural language processing entities (131a,b) if each natural language processing entity in the group of natural language processing entities (131a,b) failed to associate a computer readable command with the current linguistic user query, the further natural language processing entity (131c) being associated with computer readable commands which are assigned to another specific service, and passing on the current linguistic user query to the further natural language processing entity (131c),
determining, by the further natural language processing entity (131c), whether a computer readable command is associated with the current linguistic user query, and
outputting, by the further natural language processing entity (131c), a computer readable command if the computer readable command is associated with the current linguistic user query, and
removing, by the dispatcher, a natural language processing entity (131a-c) from the group of natural language processing entities (131a-c) if the natural language processing entity (131a-c) has not output a computer readable command after a predetermined number of linguistic user queries or for a predetermined period of time, for instance for 1 second, 2 seconds or 30 seconds.

## Patentansprüche

1. System zur Anfrageerkennung (100) für das automatische Erkennen einer aktuellen sprachlichen Benutzeranfrage, wobei die aktuelle sprachliche Benutzeranfrage durch digitale Werte dargestellt wird und das System zur Anfrageerkennung (100) Folgendes umfasst:
eine Gruppe von Einheiten für die Verarbeitung natürlicher Sprache (131a,b), um sprachlichen Benutzeranfragen computerlesbare Befehle zuzuordnen, wobei sich die computerlesbaren Befehle auf spezifische Computerdienste beziehen, die sich bei jeder Einheit für die Verarbeitung natürlicher Sprache (131a,b) unterscheiden; und
einen Zuteiler (101), der konfiguriert ist, eine Einheit für die Verarbeitung natürlicher Sprache (131a), welche als letztes einen computerlesbaren Befehl ausgegeben hat, aus der Gruppe von Einheiten für die Verarbeitung natürlicher Sprache (131a,b) auszuwählen, und die aktuelle sprachliche Benutzeranfrage an die ausgewählte Einheit für die Verarbeitung natürlicher Sprache (131a) weiterzuleiten; wobei
die ausgewählte Einheit für die Verarbeitung natürlicher Sprache (131a) konfiguriert ist, zu bestimmen, ob der aktuellen sprachlichen Benutzeranfrage ein computerlesbarer Befehl zugeordnet ist, und einen computerlesbaren Befehl auszugeben, wenn der computerlesbare Befehl der aktuellen sprachlichen Benutzeranfrage zugeordnet ist,
wobei die ausgewählte Einheit für die Verarbeitung natürlicher Sprache (131a) konfiguriert ist, eine Fehlschlag-Meldung auszugeben, wenn die ausgewählte Einheit für die Verarbeitung natürlicher Sprache (131a) der aktuellen sprachlichen Benutzeranfrage keinen computerlesbaren Befehl zuordnen konnte; und
wobei der Zuteiler (101) oder die ausgewählte Einheit für die Verarbeitung natürlicher Sprache (131a) konfiguriert ist, als Reaktion auf die Fehlschlag-Meldung eine zweite Einheit für die Verarbeitung natürlicher Sprache (131b), welche als vorletztes einen computerlesbaren Befehl ausgegeben hat, aus der Gruppe von Einheiten für die Verarbeitung natürlicher Sprache (131a,b) auszuwählen und die aktuelle sprachliche Benutzeranfrage an die ausgewählte zweite Einheit für die Verarbeitung natürlicher Sprache (131b) weiterzuleiten; und wobei
die ausgewählte zweite Einheit für die Verarbeitung natürlicher Sprache (131b) konfiguriert ist, zu bestimmen, ob der aktuellen sprachlichen Benutzeranfrage ein computerlesbarer Befehl zugeordnet ist, und einen computerlesbaren Befehl auszugeben, wenn der computerlesbare Befehl der aktuellen sprachlichen Benutzeranfrage zugeordnet ist,
wobei die ausgewählte zweite Einheit für die Verarbeitung natürlicher Sprache (131b) konfiguriert ist, eine Fehlschlag-Meldung auszugeben, wenn die ausgewählte zweite Einheit für die Verarbeitung natürlicher Sprache (131b) der aktuellen sprachlichen Benutzeranfrage keinen computerlesbaren Befehl zuordnen konnte,
wobei der Zuteiler (101) konfiguriert ist, eine weitere Einheit für die Verarbeitung natürlicher Sprache (131c) zu aktivieren und die weitere Einheit für die Verarbeitung natürlicher Sprache (131c) in die Gruppe von Einheiten für die Verarbeitung natürlicher Sprache (131a,b) aufzunehmen, wenn jede Einheit für die Verarbeitung natürlicher Sprache (131a,b) in der Gruppe von Einheiten für die Verarbeitung natürlicher Sprache (131a, b) der aktuellen sprachlichen Benutzeranfrage keinen computerlesbaren Befehl zuordnen konnte, wobei die weitere Einheit für die Verarbeitung natürlicher Sprache (131c) computerlesbaren Befehlen zugeordnet ist, die einem anderen spezifischen Dienst zugewiesen sind, und die aktuelle sprachliche Benutzeranfrage an die weitere Einheit für die Verarbeitung natürlicher Sprache (131c) weiterzuleiten; und eine Einheit für die Verarbeitung natürlicher Sprache (131a-c) aus der Gruppe von Einheiten für die Verarbeitung natürlicher Sprache (131a-c) zu entfernen, wenn die Einheit für die Verarbeitung natürlicher Sprache (131a-c) nach einer vorbestimmten Anzahl an sprachlichen Benutzeranfragen oder über einen vorbestimmten Zeitraum, beispielsweise 1 Sekunde, 2 Sekunden oder 30 Sekunden, keinen computerlesbaren Befehl ausgegeben hat, wobei die weitere Einheit für die Verarbeitung natürlicher Sprache (131c) konfiguriert ist, zu bestimmen, ob der aktuellen sprachlichen Benutzeranfrage ein computerlesbarer Befehl zugeordnet ist, und einen computerlesbaren Befehl auszugeben, wenn der computerlesbare Befehl der aktuellen sprachlichen Benutzeranfrage zugeordnet ist.

2. System zur Anfrageerkennung (100) nach Anspruch 1, wobei jede Einheit für die Verarbeitung natürlicher Sprache (131a-c) eine Datenbank umfasst, die konfiguriert ist, die computerlesbaren Befehle, welche im Zusammenhang mit einem spezifischen Computerdienst stehen, zu speichern und wobei die ausgewählte Einheit für die Verarbeitung natürlicher Sprache (131a) konfiguriert ist, zu bestimmen, ob der aktuellen sprachlichen Benutzeranfrage ein in der Datenbank der ausgewählten Einheit für die Verarbeitung natürlicher Sprache (131a) gespeicherter computerlesbarer Befehl zugeordnet ist, und den computerlesbaren Befehl aus der Datenbank abzurufen, wenn der computerlesbare Befehl der aktuellen sprachlichen Benutzeranfrage zugeordnet ist.

3. System zur Anfrageerkennung (100) nach einem der vorhergehenden Ansprüche, wobei die aktuelle sprachliche Benutzeranfrage einen aktuellen Anfrageparameter umfasst und wobei sich der computerlesbare Befehl auf den aktuellen Anfrageparameter bezieht oder diesen berücksichtigt.

4. System zur Anfrageerkennung (100) nach einem der vorhergehenden Ansprüche, wobei die aktuelle sprachliche Benutzeranfrage einen aktuellen Anfrageparameter umfasst, wobei die ausgewählte Einheit für die Verarbeitung natürlicher Sprache (131a) konfiguriert ist, den aktuellen Anfrageparameter aus der aktuellen sprachlichen Benutzeranfrage zu extrahieren und zu bestimmen, ob eine zuvor empfangene sprachliche Benutzeranfrage einen vorherigen Anfrageparameter desselben Parametertyps wie der aktuelle Anfrageparameter enthielt, um der aktuellen sprachlichen Benutzeranfrage einen computerlesbaren Befehl zuzuordnen.

5. System zur Anfrageerkennung (100) nach Anspruch 4, wobei, wenn die zuvor empfangene sprachliche Benutzeranfrage einen vorherigen Anfrageparameter desselben Parametertyps wie der aktuelle Anfrageparameter enthielt, die ausgewählte Einheit für die Verarbeitung natürlicher Sprache (131a) konfiguriert ist, nach dem Austauschen des vorherigen Anfrageparameters mit dem aktuellen Anfrageparameter einen zuvor ausgegebenen Computerbefehl zu modifizieren.

6. System zur Anfrageerkennung (100) nach Anspruch 4 oder 5, wobei der Parametertyp der Intentionstyp oder der Kontexttyp ist, wobei der Intentionstyp eine Intention einer sprachlichen Benutzeranfrage, insbesondere eine spezifische Handlung, kennzeichnet und der Kontexttyp einen Medientyp oder eine Ressource kennzeichnet.

7. System zur Anfrageerkennung (100) nach einem der Ansprüche 3 bis 6, wobei der aktuelle Anfrageparameter ein Intentionsparameter ist, der eine Intention der aktuellen sprachlichen Anfrage kennzeichnet, oder ein Kontextparameter, der einen Kontext der sprachlichen Anfrage kennzeichnet.

8. System zur Anfrageerkennung (100) nach einem der vorhergehenden Ansprüche, wobei ein spezifischer Computerdienst einer der folgenden Dienste ist: ein Informationsdienst, bspw. Veranstaltungsinformationsdienst oder Wetterinformationsdienst oder Standortinformationsdienst oder Inhaltsauswahldienst oder Shoppinginformationsdienst oder Witzinformationsdienst oder Weltwissensdienst oder Bahninformationsdienst, oder ein Gerätekontrolldienst, bspw. Audioplayer-Kontrolldienst oder Fernsehkontrolldienst oder Timerkontrolldienst oder Erinnerungskontrolldienst.

9. System zur Anfrageerkennung (100) nach einem der vorhergehenden Ansprüche, wobei der Zuteiler (101) konfiguriert ist, mit den Einheiten für die Verarbeitung natürlicher Sprache (131a-c) über dedizierte Schnittstellen, insbesondere APIs, oder über ein Kommunikationsnetzwerk, insbesondere unter Verwendung des IP-Protokolls, zu kommunizieren.

10. System zur Anfrageerkennung (100) nach einem der vorhergehenden Ansprüche umfassend einen Prozessor, wobei der Prozessor konfiguriert ist, den Zuteiler (101) zu implementieren.

11. Verfahren zur Anfrageerkennung (500) für das automatische Erkennen einer aktuellen sprachlichen Benutzeranfrage, wobei die aktuelle sprachliche Benutzeranfrage von digitalen Werten dargestellt wird, unter Verwendung einer Gruppe von Einheiten für die Verarbeitung natürlicher Sprache (131a-b), um sprachlichen Benutzeranfragen computerlesbare Befehle zuzuordnen, wobei sich die computerlesbaren Befehle auf spezifische Computerdienste beziehen, die sich bei jeder Einheit für die Verarbeitung natürlicher Sprache unterscheiden, umfassend:
Auswählen (501), unter Verwendung eines Zuteilers (101), einer Einheit für die Verarbeitung natürlicher Sprache (131a), die als letztes einen computerlesbaren Befehl ausgegeben hat, aus der Gruppe von Einheiten für die Verarbeitung natürlicher Sprache (131a,b) und Weiterleiten der aktuellen sprachlichen Benutzeranfrage an die ausgewählte Einheit für die Verarbeitung natürlicher Sprache (131a); und
Bestimmen (503), durch die ausgewählte Einheit für die Verarbeitung natürlicher Sprache (131a), ob der aktuellen sprachlichen Benutzeranfrage ein computerlesbarer Befehl zugeordnet ist,
Ausgeben, durch die ausgewählte Einheit für die Verarbeitung natürlicher Sprache (131a), eines computerlesbaren Befehls, wenn der computerlesbare Befehl durch die ausgewählte Einheit für die Verarbeitung natürlicher Sprache (131a) der aktuellen sprachlichen Benutzeranfrage zugeordnet ist; und
Ausgeben, durch die ausgewählte Einheit für die Verarbeitung natürlicher Sprache (131a), einer Fehlschlag-Meldung, wenn die ausgewählte Einheit für die Verarbeitung natürlicher Sprache (131a) der aktuellen sprachlichen Benutzeranfrage keinen computerlesbaren Befehl zuordnen konnte; und
Auswählen, durch den Zuteiler oder die ausgewählte Einheit für die Verarbeitung natürlicher Sprache (131a), als Reaktion auf die Fehlschlag-Meldung, einer zweiten Einheit für die Verarbeitung natürlicher Sprache, die als vorletztes einen computerlesbaren Befehl ausgegeben hat, aus der Gruppe von Einheiten für die Verarbeitung natürlicher Sprache (131a,b) und Weiterleiten der aktuellen sprachlichen Benutzeranfrage an die ausgewählte zweite Einheit für die Verarbeitung natürlicher Sprache (131a); und
Bestimmen, durch die ausgewählte zweite Einheit für die Verarbeitung natürlicher Sprache (131b), ob der aktuellen sprachlichen Benutzeranfrage ein computerlesbarer Befehl zugeordnet ist, Ausgeben eines computerlesbaren Befehls, wenn der computerlesbare Befehl der aktuellen sprachlichen Benutzeranfrage zugeordnet ist, und Ausgeben einer Fehlschlag-Meldung, wenn die ausgewählte zweite Einheit für die Verarbeitung natürlicher Sprache (131b) der aktuellen sprachlichen Benutzeranfrage keinen computerlesbaren Befehl zuordnen konnte, und
Aktivieren und Aufnehmen, durch den Zuteiler (101), einer weiteren Einheit für die Verarbeitung natürlicher Sprache (131c) in die Gruppe von Einheiten für die Verarbeitung natürlicher Sprache (131a,b), wenn jede Einheit für die Verarbeitung natürlicher Sprache in der Gruppe von Einheiten für die Verarbeitung natürlicher Sprache (131a,b) der aktuellen sprachlichen Benutzeranfrage keinen computerlesbaren Befehl zuordnen konnte, wobei die weitere Einheit für die Verarbeitung natürlicher Sprache (131c) computerlesbaren Befehlen zugeordnet ist, die einem anderen spezifischen Dienst zugewiesen sind, und Weiterleiten der aktuellen sprachlichen Benutzeranfrage an die weitere Einheit für die Verarbeitung natürlicher Sprache (131c),
Bestimmen, durch die weitere Einheit für die Verarbeitung natürlicher Sprache (131c), ob der aktuellen sprachlichen Benutzeranfrage ein computerlesbarer Befehl zugeordnet ist, und
Ausgeben, durch die weitere Einheit für die Verarbeitung natürlicher Sprache (131c), eines computerlesbaren Befehls, wenn der computerlesbare Befehl der aktuellen sprachlichen Benutzeranfrage zugeordnet ist; und
Entfernen, durch den Zuteiler, einer Einheit für die Verarbeitung natürlicher Sprache (131a-c) aus der Gruppe von Einheiten für die Verarbeitung natürlicher Sprache (131a-c), wenn die Einheit für die Verarbeitung natürlicher Sprache (131a-c) nach einer vorbestimmten Anzahl an sprachlichen Benutzeranfragen oder über einen vorbestimmten Zeitraum, beispielsweise 1 Sekunde, 2 Sekunden oder 30 Sekunden, keinen computerlesbaren Befehl ausgegeben hat.

## Revendications

1. Système de reconnaissance de requêtes (100) pour reconnaitre automatiquement une requête d'utilisateur linguistique courante, cette dernière étant représentée par des valeurs numériques, le système de reconnaissance de requêtes (100) comprenant :
un groupe d'entités de traitement de langage (131a,b) naturel pour associer les commandes lisibles par ordinateur à des requêtes d'utilisateur linguistiques, les commandes lisibles par ordinateur ayant trait des services informatiques précis différents pour chaque entité de traitement de langage (131a,b); et
un répartiteur (101) étant configuré pour sélectionner une entité de traitement de langage naturel (131a) qui a le plus récemment affiché une commande lisible par ordinateur du groupe d'entités de langage naturel (131 a,b), et pour transmettre la requête d'utilisateur linguistique courante à l'entité de traitement de langage naturel sélectionnée (131a);
l'entité de traitement de langage naturel sélectionnée (131a) étant configurée pour déterminer si une commande lisible par ordinateur est associée à la requête d'utilisateur linguistique courante, et pour afficher une commande lisible par ordinateur si la commande lisible par ordinateur est associée à la requête d'utilisateur linguistique courante,
l'entité de traitement de langage naturel sélectionnée (131a) étant configurée pour afficher un message d'échec si l'entité de traitement de langage naturel sélectionnée (131a) n'a pas réussi à associer une commande lisible par ordinateur à la requête d'utilisateur linguistique courante; et
le répartiteur (101) ou l'entité de traitement de langage naturel sélectionnée (131a) étant configurée, en réponse au message d'échec, pour sélectionner une seconde entité de traitement de langage naturel (131b) qui a affiché pénultièmement une commande lisible par ordinateur du groupe d'entités de langage naturel (131 a,b) et pour transmettre la requête d'utilisateur linguistique courante à la seconde entité de traitement de langage naturel sélectionnée (131b);
la seconde entité de traitement de langage naturel sélectionnée (131b) étant configurée pour déterminer si une commande lisible par ordinateur est associée à la requête d'utilisateur linguistique courante, et pour afficher une commande lisible par ordinateur si cette dernière est associée à la requête d'utilisateur linguistique courante,
la seconde entité de traitement de langage naturel sélectionnée (131b) étant configurée pour afficher un message d'échec si la seconde entité de traitement de langage naturel sélectionnée (131b) n'a pas réussi à associer une commande lisible par ordinateur à la requête d'utilisateur linguistique courante; et
le répartiteur (101) étant configuré pour activer une autre entité de traitement de langage naturel (131c) et pour inclure cette dernière dans le groupe des entités de traitement de langage naturel (131a,b) si chaque entité de traitement de langage naturel dans le groupe d'entités de traitement de langage naturel (131a,b) n'a pas réussi à associer une commande lisible par ordinateur à la requête d'utilisateur linguistique courante, l'autre entité de traitement de langage naturel (131c) étant associée aux commandes lisibles par ordinateur qui sont attribuées à un autre service précis, et pour transmettre la requête d'utilisateur linguistique courante à l'autre entité de traitement de langage naturel (131c); et pour supprimer une entité de traitement de langage naturel (131a-c) du groupe d'entités de traitement de langage naturel (131a-c) si l'entité de traitement de langage naturel (131a-c) n'a pas affiché une commande lisible par ordinateur après un nombre prédéterminé de requêtes d'utilisateurs linguistiques ou pendant une période prédéterminée, par exemple 1 seconde, 2 secondes ou 30 secondes, l'autre entité de traitement de langage naturel (131c) étant configurée pour déterminer si une commande lisible par ordinateur est associée à la requête d'utilisateur linguistique courante, et pour afficher une commande lisible par ordinateur si cette dernière est associée à la requête d'utilisateur de langage courante.

2. Système de reconnaissance de requêtes (100) selon la revendication 1, chaque entité de traitement de langage naturel (131a-c) comprenant une base de données configurée pour mémoriser les commandes lisibles par ordinateur ayant trait à un service informatique précis, et l'entité de traitement de langage naturel sélectionné (131a) étant configurée pour déterminer si une commande lisible par ordinateur mémorisée dans la base de données de l'entité de traitement de langage naturel sélectionnée (131a) est associée à la requête d'utilisateur linguistique courante, et pour récupérer la commande lisible par ordinateur de la base de données si la commande lisible par ordinateur est associée à la requête d'utilisateur linguistique courante.

3. Système de reconnaissance de requêtes (100) selon l'une des revendications précédentes, la requête d'utilisateur linguistique courante comprenant un paramètre de requête courant, et la commande lisible par ordinateur renvoyant ou rendant compte au paramètre de requête courant

4. Système de reconnaissance de requêtes (100) selon l'une quelconque des revendications précédentes, la requête d'utilisateur linguistique courante comprenant un paramètre de requête courant, l'entité de traitement de langage naturel sélectionnée (131a) étant configurée pour extraire le paramètre de requête courant de la requête d'utilisateur linguistique courante, et pour déterminer si une requête d'utilisateur linguistique reçue précédemment contenait un paramètre de requête précédent du même type de paramètre que le paramètre de requête courant pour associer une commande lisible par ordinateur à une requête d'utilisateur linguistique courant.

5. Système de reconnaissance de requêtes (100) selon la revendication 4, l'entité de traitement de langage naturel sélectionnée (131a) étant configurée pour modifier une commande informatique affichée précédemment après l'échange du paramètre de requête précédent par le paramètre de requête courant si la requête d'utilisateur linguistique reçue précédemment contenait un paramètre de requête précédent du même type de paramètre que le paramètre de requête courant.

6. Système de reconnaissance de requêtes (100) selon la revendication 4 ou 5, le type de paramètre étant le type d'intention ou le type de contexte, le type d'intention indiquant une intention d'une requête d'utilisateur linguistique, particulièrement une action spécifique, le type de contexte indiquant un type de support ou une ressource.

7. Système de reconnaissance de requêtes (100) selon l'une quelconque des revendications 3 à 6, le paramètre de requête courant étant un paramètre d'intention indiquant une intention de la requête linguistique courante ou un paramètre de contexte indiquant un contexte de la requête linguistique.

8. Système de reconnaissance de requête (100) selon l'une quelconque des revendications précédentes, un service informatique spécifique étant l'un des services suivants : service d'information, par exemple un service d'information d'événement ou un service d'information de météo ou un service d'information de localisation ou un service de sélection de contenu ou un service d'information d'achats ou un service d'information de blagues ou un service de connaissance du monde ou un service d'information de train, ou un service de commande de dispositif, par exemple un service de commande de lecteur audio ou de téléviseur ou un service de commande de minuterie ou un service de commande de rappels.

9. Système de reconnaissance de requêtes (100) selon l'une quelconque des revendications précédentes, le répartiteur (101) étant configuré pour communiquer avec les entités de traitement de langage naturel (131a-c) en utilisant des interfaces dédiées, particulièrement les API, ou par l'entremise d'un réseau de communication, particulièrement en utilisant le protocole IP.

10. Système de reconnaissance de requêtes (100) selon l'une quelconque des revendications précédentes, comprenant un processeur, le processeur étant configuré pour réaliser le répartiteur (101).

11. Procédé de reconnaissance de requêtes (500) pour reconnaitre automatiquement une requête d'utilisateur linguistique courant, la requête d'utilisateur linguistique courante étant représentée par des valeurs numériques utilisant un groupe d'entités de traitement de langage naturel (131a,b) pour associer les commandes lisibles par ordinateur aux requêtes d'utilisateurs linguistiques, les commandes lisibles par ordinateur ayant trait aux services informatiques précis qui sont différents pour chaque entité de traitement de langage, ledit procédé comprend :
la sélection (501), en utilisant un répartiteur (101), d'une entité de traitement de langage naturel (131a) qui a le plus récemment affiché une commande lisible par ordinateur du groupe d'entités de langage naturel (131 a,b), et la transmission de la requête d'utilisateur linguistique courant à l'entité de traitement de langage naturel sélectionnée (131a); et
la détermination (503) par l'entité de traitement de langage naturel sélectionné (131a), si une commande lisible par ordinateur est associée à la requête d'utilisateur linguistique courante,
l'affichage, par l'entité de traitement de langage naturel sélectionné (131a), d'une commande lisible par ordinateur si cette dernière est associée à la requête d'utilisateur linguistique courante par l'entité de traitement de langage naturel sélectionné (131a), et
l'affichage, par l'entité de traitement de langage naturel sélectionnée (131a), d'un message d'échec si l'entité de traitement de langage naturel sélectionnée (131a) n'a pas réussi à associer une commande lisible par ordinateur à la requête d'utilisateur linguistique courante; et
la sélection, par le répartiteur ou l'entité de traitement de langage naturel sélectionnée (131a), en réponse au message d'échec, d'une seconde entité de traitement de langage naturel qui a pénultièmement affiché une commande lisible par ordinateur du groupe d'entités de langage naturel (131a,b) et la transmission de la requête d'utilisateur linguistique courante à la seconde entité de traitement de langage naturel sélectionnée (131b); et
la détermination par la seconde entité de traitement de langage naturel sélectionnée (131b) si une commande lisible par ordinateur est associée à la requête d'utilisateur linguistique courante, l'affichage d'une commande lisible par ordinateur si cette dernière est associée à la requête d'utilisateur linguistique courante, et l'affichage d'un message d'échec si la seconde entité de traitement de langage naturel sélectionnée (131b) n'a pas réussi à associer une commande lisible par ordinateur à une requête d'utilisateur linguistique courante, et
l'activation et l'inclusion, par le répartiteur (101), d'une autre entité de traitement de langage naturel (131c) dans le groupe d'entités de traitement de langage naturel (131a,b) si chaque entité de traitement de langage naturel dans le groupe d'entités de traitement de langage naturel (131a,b) n'a pas réussi à associer une commande lisible par ordinateur à la requête d'utilisateur linguistique courante, l'autre entité de traitement de langage naturel (131c) étant associée aux commandes lisibles par ordinateur qui sont attribuées à un autre service précis, et
la transmission de la requête d'utilisateur linguistique courante à l'autre entité de traitement de langage naturel (131c),
la détermination par l'entité de traitement de langage naturel sélectionné (131c) si une commande lisible par ordinateur est associée à la requête d'utilisateur linguistique courante, et
l'affichage, par l'autre entité de traitement de langage naturel (131c), d'une commande lisible par ordinateur si cette dernière est associée à la requête d'utilisateur de langage courante, et
la suppression, par le répartiteur, d'une entité de traitement de langage naturel (131a-c) du groupe d'entités de traitement de langage naturel (131a-c) si l'entité de traitement de langage naturel (131a-c) n'a pas affiché une commande lisible par ordinateur après un nombre prédéterminé de requêtes d'utilisateurs linguistiques ou pendant une période prédéterminée, par exemple 1 seconde, 2 secondes ou 30 secondes.
